# EUROPÄISCHE PATENTSCHRIFT

(11) **EP 3 722 529 B1**
(45) Veröffentlichungstag und Bekanntmachung des Hinweises auf die Patenterteilung: **25.03.2026**
(21) Anmeldenummer: 20168526.0
(22) Anmeldetag: 07.04.2020
(51) Int. Cl.: E04D 3/08

(54) **ÜBERDACHUNGSSYSTEM**
ROOFING SYSTEM
SYSTÈME DE TOITURE

(30) Priorität: 09.04.2019 DE 102019109243
(43) Veröffentlichungstag der Anmeldung: 14.10.2020
(73) Patentinhaber: Hoffmann, Walter, 65527 Niedernhausen (DE)
(72) Erfinder: Hoffmann, Walter, 65527 Niedernhausen (DE)
(74) Vertreter: WSL Patentanwälte Partnerschaft mbB

(56) Entgegenhaltungen:
- EP-A2- 2 607 567
- WO-A1-2006/000760
- DE-U1- 202016 005 196
- FR-A1- 2 878 545

## Beschreibung

Die vorliegende Erfindung betrifft ein Überdachungssystem. Das Überdachungssystem kann beispielsweise für Terrassenüberdachungen, Carports, Vordächer, Überdachungen von Freifeldflächen, usw. verwendet werden. Die Überdachung besteht dabei meist aus einer Vielzahl von parallel zueinander angeordneten Trägermodulen, deren Abstand voneinander durch Zwischenelemente überbrückt wird. Die Trägermodule liegen meist zumindest einseitig auf einem Querbalken auf, welcher entweder an einer Wand montiert ist oder auf entsprechenden Pfosten steht. Als Zwischenelemente rücken zunehmend Photovoltaik-Module in den Fokus, welche es mittlerweile auch als halbtransparente Module gibt, welche einen gewissen Anteil an Sonnenlicht durchlassen.

Es gibt bereits entsprechende Photovoltaik-Überdachungen. Diese werden jedoch überwiegend aus üblichen Aluminiumprofilen als Stahlbaukonstruktion oder aus Holz hergestellt. Dies sind jedoch in der Regel Prototypen, die lediglich einmal bei einem Testkunden aufgebaut worden sind. Andere Systeme werden speziell für den Kunden gefertigt, was aufwendig ist.

Die üblichen Überdachungen sehen keine Integration von Photovoltaik-Modulen vor. Die die Zwischenelemente werden dort derart auf die Trägermodule aufgelegt, dass sie nebeneinander liegen und die Kantenflächen sich tatsächlich oder nahezu berühren. Da es bei Überdachungen unerwünscht ist, dass Regenwasser zwischen den Kantenflächen von benachbarten Zwischenelementen durchdringen kann, ist es bei der Montage notwendig, die Zwischenelemente zu betreten, um die sich durch aneinander liegende Kantenfläche gebildete Fugen abzudichten oder abzudecken. Photovoltaik-Module sind in der Regel nicht dafür ausgelegt, betreten zu werden, sodass die bekannten Überdachungssysteme nicht geeignet sind. Darüber hinaus müssen Photovoltaik-Module ab und an gewartet, repariert oder getauscht werden. Bei den bekannten Überdachungssystemen ist es in der Regel nicht möglich, ein einzelnes Zwischenelement zu tauschen ohne die anderen Zwischenelemente zu demontieren.

Gerade bei Photovoltaik-Modulen ist eine geneigte Anordnung gewünscht, damit Regenwasser zügig abfließt und um eine möglichst hohen Stromertrag zu erzielen. Photovoltaik-Module sind auch deutlich schwerer als andere Zwischenelemente aus z.B. Glas oder transparentem Kunststoff. Daher müssen die Trägermodule fest mit den Querbalken verbunden werden.

Dies erfordert bei den bekannten Überdachungssystemen eine individuelle Planung und eine individuelle Maßanfertigung, da die exakte Position der Querbalken vor Ort ausgemessen und das Überdachungssystem entsprechend angepasst werden muss.

Insbesondere bei geneigten Überdachungen ist es bei den bekannten Überdachungssystemen notwendig, die exakte Position der Pfosten bei gegebener Länge der Trägermodule zu kennen, da die tatsächliche Neigung von der exakten Position der Pfosten bzw. der exakten Position des Querbalkens, auf dem die Trägermodule befestigt sind, abhängt.

Auch die DE 20 2016 00519621 und die EP 2 697 567A2 zeigen Überdachungen mit Querbalken und Trägermodulen.

Vor dem Hintergrund des beschriebenen Standes der Technik ist es daher Aufgabe der vorliegenden Erfindung, ein Überdachungssystem bereitzustellen, welches bei Verwendung von geneigten Trägermodulen eine einfache Anpassung des Überdachungssystems an unterschiedliche Pfostenpositionen oder unterschiedliche Positionen von Querbalken erlaubt.

Erfindungsgemäß wird dies durch ein Überdachungssystem für Terrassen, Balkone oder Parkplätze gemäß Anspruch 1 gelöst.

Zur Erläuterung der Erfindung wird im Folgenden zunächst davon ausgegangen, dass das erste Trägerelement ein Trägermodul und das zweite Trägerelement ein Querbalken zur Aufnahme eines Trägermoduls ist. Weiter unten wird jedoch gezeigt, dass das Befestigungselement nicht unbedingt Querbalken und Trägermodul miteinander befestigen muss.

Das Trägermodul dient zur Aufnahme und Halterung der Zwischenelemente, wie z.B. der Photovoltaik-Module. Auch wenn grundsätzlich ein Trägermodul ausreichend ist, sind vorzugsweise mehrerer Trägermodule vorgesehen, wobei die parallelen Kanten der Photovoltaik-Module jeweils von einem Trägermodul gehalten werden. Um ein Ablaufen des Regens zu unterstützen, sind in einer bevorzugten Ausführungsform die Trägermodul gegenüber der Horizontalen geneigt angeordnet.

Die Trägermodule liegen zumindest einseitig, vorzugsweise beidseitig auf Querbalken auf, die zur Verwirklichung der gewünschten Neigung der Trägermodule in unterschiedlichen Höhen angeordnet sind. Falls die Querbalken in gleicher Höhe angeordnet sind, kann die Neigung durch Befestigungselemente zwischen Querbalken und Trägermodule erzeugt werden, welche einen unterschiedlichen Abstand zwischen Querbalken und Trägermodul verwirklichen.

Die Querbalken können wiederum an einer Hauswand montiert werden oder auf entsprechenden Pfosten montiert werden. Die Länge der Pfosten bestimmt dann die Höhenposition des auf dem Pfosten montierten Querbalkens.

Bei der Positionierung der Pfosten ist in der Regel auf die örtlichen Gegebenheiten Rücksicht zu nehmen. Tragen beispielsweise die Pfosten den unteren Querbalken, d. h. den Querbalken der geodätisch tiefer als der obere Querbalken positioniert ist, bewirkt eine Verschiebung der Pfosten in Richtung des oberen Querbalkens eine Verringerung der Neigung des Trägermoduls relativ zur Horizontalen.

Der tatsächlich realisierte Neigungswinkel der Trägermodule hängt bei vorgegebener Höhendifferenz d zwischen den beiden Querbalken ausschließlich vom Abstand a der beiden Querbalken ab. Der Winkel α berechnet sich aus dem arctan(d/a).

Wird daher bei der Montage des Überdachungssystem entschieden, die Pfosten des unteren Querbalkens näher in Richtung des oberen Querbalken zu verschieben, bedeutet dies, dass sich der Neigungswinkel der Trägermodule leicht ändert und die Befestigung zwischen Trägermodul und Querbalken angepasst werden muss.

Erfindungsgemäß ist nun das Befestigungselement, mit welchem das Trägermodul am Querbalken befestigt wird, derart ausgebildet, dass es eine Befestigung des Sparrenelementes am Querbalken in mindestens zwei Positionen ermöglicht, die sich dadurch unterscheiden, dass das Trägermodul relativ zum Querbalken um einen Winkel α gedreht ist. Dies ermöglicht es, den unteren Querbalken in zwei Positionen, die unterschiedlich weit vom oberen Querbalken entfernt sind, zu positionieren, ohne dass das Befestigungselement ausgetauscht werden muss. Durch die Maßnahme muss das Überdachungssystem nicht mehr auf Maß hergestellt werden, sondern kann flexibel auf die örtlichen Gegebenheiten angepasst werden.

Weiterhin erfindungsgemäß weist das Befestigungselement ein Kopfteil und ein Pfannenteil auf, wobei das Kopfteil einen Kopfgelenksabschnitt und das Pfannenteil einen Pfannengelenksabschnitt, welcher den Gelenksabschnitt zumindest teilweise umschließt und an mindestens drei Punkten mit dem Kopfgelenksabschnitt in Kontakt tritt, aufweist, wobei Kopfgelenkabschnitt und Pfannengelenkabschnitt kugelsegmentsegmentförmig ausgebildet ist und Kopfteil und Pfannenteil relativ zueinander um die Drehachse gedreht werden können.

In einer bevorzugten Ausführungsform ist vorgesehen, dass das Befestigungselement derart ausgelegt ist, dass es eine Befestigung in jeder Position zwischen der ersten und der zweiten Position erlaubt.

Mit anderen Worten kann dadurch der untere Querbalken zwischen zwei Positionen, die unterschiedlich weit vom oberen Querbalken entfernt sind, beliebig positioniert werden. Das führt zu leicht unterschiedlichen Neigungswinkeln des Trägermoduls. In allen Positionen kann jedoch eine Befestigung des Trägermoduls am Querbalken erfolgen.

Die Drehachse verläuft dann durch den Mittelpunkt des Kugelsegmentes oder auf der Zylinderachse des Zylindersegmentes, so dass der Kopfgelenkabschnitt relativ zum Pfannengelenkabschnitt gedreht werden kann.

Weiterhin ist erfindungsgemäß vorgesehen, dass das erste und/oder zweite Trägerelement als Hohlprofil ausgebildet ist, wobei das Hohlprofil eine hinterschnittene Nut aufweist und das Befestigungselement einen Nutenstein aufweist, welcher in die hinterschnittene Nut eingreift.

Dadurch können erstes und zweites Trägerelement, d.h. im beschriebenen Beispiel das Trägermodul und der Querbalken kostengünstig als Hohlprofil hergestellt werden. Zur Verbindung der beiden Hohlprofile dient dann das Befestigungselement, welches in eine hinterschnittene Nut eines oder beider Trägerelemente eingreift. Beispielsweise kann die hinterschnittene Nut eine Schwalbenschwanznut sein. Die Befestigung des Befestigungselementes in der Nut hat zudem den Vorteil, dass das Befestigungselement entlang der Nut verschoben werden kann, was die Flexibilität des Überdachungssystems erhöht.

In einer bevorzugten Ausführungsform weisen Kopfteil und/oder Pfannenteil einen Nutenstein auf, welcher in die hinterschnittene Nut eingreift.

In einer weiteren bevorzugten Ausführungsform ist vorgesehen, dass entweder i) das erste Trägerelement ein Trägermodul und das zweite Trägerelement ein Querbalken zur Aufnahme eines Sparrenelementes ist oder ii) das erste Trägerelement ein Pfosten zum Tragen eines Querbalken und das zweite Trägerelement ein Querbalken zur Aufnahme eines Trägermodul ist.

Die erste Variante wurde bereits erläutert. Alternativ dazu kann das Befestigungselement allerdings auch zwischen Querbalken und Pfosten angeordnet sein, um die Anpassbarkeit an verschiedene Neigungswinkel des Trägermoduls zu ermöglichen. In diesem Fall ist der Querbalken nicht relativ zum Trägermodul in zwei unterschiedlichen Positionen montierbar. Stattdessen wird die Flexibilität in der Neigung des Trägermodul durch das Befestigungselement zwischen Querbalken und Pfosten bereitgestellt. Bei einer Änderung des Neigungswinkel des Trägermoduls verkippt somit der Querbalken zusammen mit dem Trägermodul. Der Pfosten verbleibt jedoch in seiner vorzugsweise senkrechten Position und das Befestigungselement ermöglicht das Verkippen des Querbalkens relativ zum Pfosten.

In einer weiteren bevorzugten Ausführungsform ist vorgesehen, dass ein Trägermodul, ein Querbalken und ein Pfosten vorgesehen sind, wobei sowohl Querbalken als auch Pfosten als Hohlkammerprofil ausgebildet sind, wobei vorzugsweise der Querschnitt des Hohlkammerprofils des Pfosten mit dem Querschnitt des Hohlkammerprofils des Querbalken übereinstimmt. Dies reduziert die Herstellungskosten des Überdachungssystem erheblich, da für den Pfosten und den Querbalken das gleiche Hohlkammerprofil verwendet wird.

Weitere Vorteile, Merkmale und Anwendungsmöglichkeiten werden deutlich anhand der folgenden Beschreibung einiger bevorzugter Ausführungsformen und der zugehörigen Figuren. Es zeigen:
- Figur 1: eine perspektivische Ansicht einer ersten Ausführungsform,
- Figur 2: eine Draufsicht auf eine zweite Ausführungsform,
- Figur 3: eine perspektivische Ansicht einer dritten Ausführungsform,
- Figur 4: eine Draufsicht auf eine Ausführungsform,
- Figuren 5 bis 6: verschiedene Ansichten einer weiteren Ausführungsform,
- Figur 7: eine alternative Ausführungsform eines Querbalken und
- Figur 8: eine Querschnittsansicht eines Regenrinnenelementes.

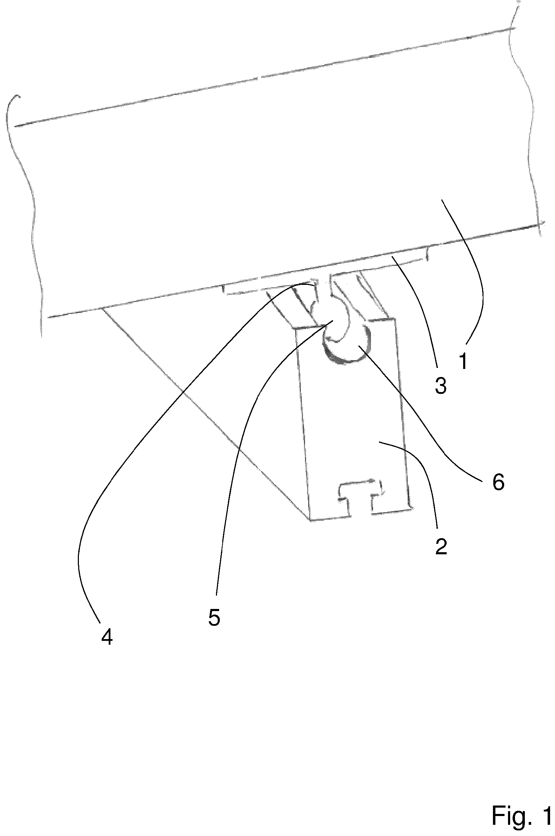

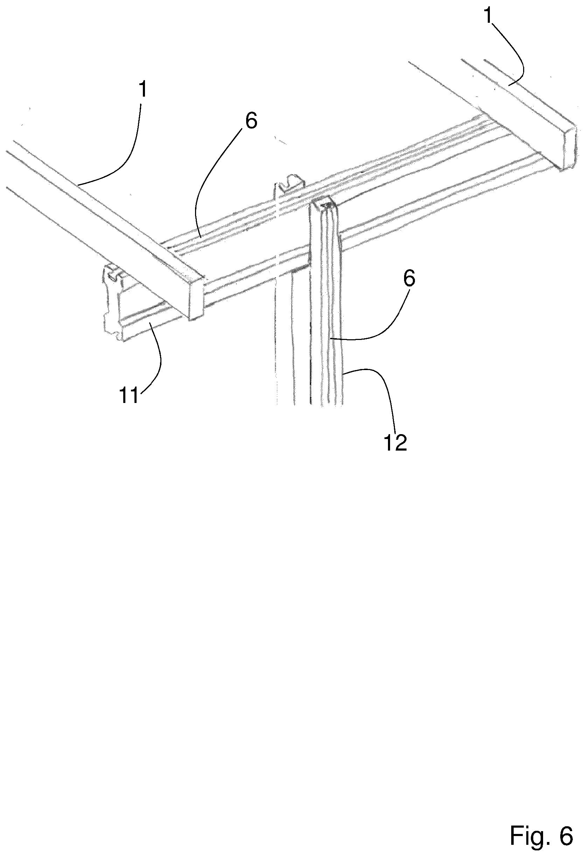

Keine der in den Figuren 1-8 gezeigten Ausführungsformen entspricht genau die Erfindung, die in den Ansprüchen definiert ist.

In Figur 1 ist eine perspektivische Ansicht einer ersten Ausführungsform gezeigt. Man erkennt ein Trägermodul 1. Solch ein Trägermodul kann seitliche Aufnahmenuten (nicht gezeigt) zur Aufnahme von Zwischenelementen, wie z.B. Photovoltaik-Modulen aufweisen. Im gezeigten Beispiel kann das Trägermodul 1 von einem Sparrenelement und einem daran befestigten Halteprofil gebildet sein. Das Trägermodul 1 ist geneigt angeordnet, sodass auf das Photovoltaik-Modul auftreffendes Regenwasser leicht abfließen kann.

Das Trägermodul 1 liegt auf einem als Strangpressprofil ausgebildeten Querbalken 2 auf. An der Unterseite des Trägermoduls ist ein Flacheisen 3 mit einem über ein Schwert 4 verbundenen Rundstab 5 angebracht. Dieser Rundstab 5 hat einen zylindersegmentförmigen Querschnitt, welcher in eine hinterschnittene Nut 6 in dem Strangpressprofil eingreift. Die hinterschnittene Nut 6 hat eine zu dem zylindersegmentförmigen Querschnitt korrespondierenden Abmessung, sodass der Rundstab 5 entlang der Zylinderachse des Zylinderflächensegments innerhalb der Nut 6 um einen begrenzten Winkel gedreht werden kann.

Dadurch ist es möglich mit dem gleichen Querbalken 2 und dem gleichen Trägermodul 1 eine Vielzahl von unterschiedlichen Neigungswinkeln des Trägermoduls 1 zu verwirklichen. Auch kann der Querbalken 2 senkrecht zum Trägermodul 1 derart verschoben werden, dass der Rundstab 5 sich in der Nut 6 verschiebt.

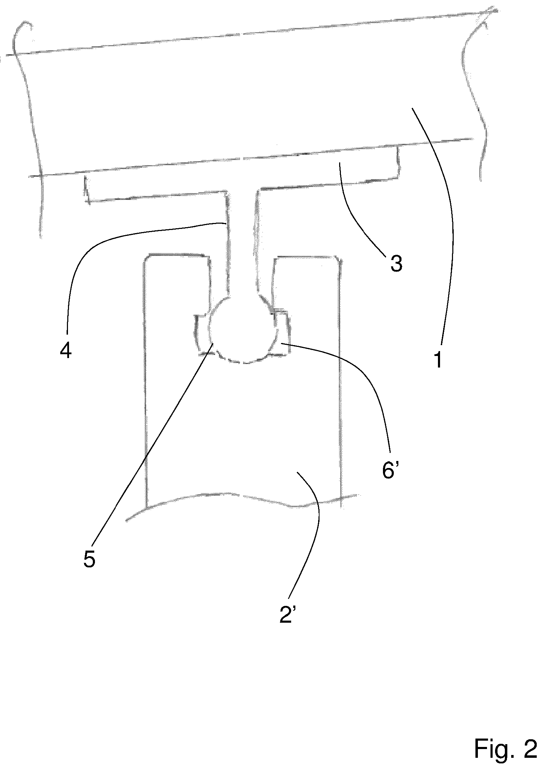

In Figur 2 ist eine Draufsicht auf eine zweite Ausführungsform gezeigt. Diese unterscheidet sich von der ersten Ausführungsform im Wesentlichen dadurch, dass der Querbalken 2'als hinterschnittene Nut 6' eine T-Nut aufweist. Die T-Nut ist derart ausgebildet, dass der Rundstab 5 die hinterschnittene Nut 6' im Wesentlichen an drei unterschiedlichen Punkten berührt. Eine solche Dreipunktlagerung reicht aus, um eine gewisse Drehbeweglichkeit des Rundstabes 5 um seine Achse innerhalb der T-Nut 6' zu ermöglichen, wodurch verschiedene Bewegungen des Trägermoduls 1 verwirklicht werden können.

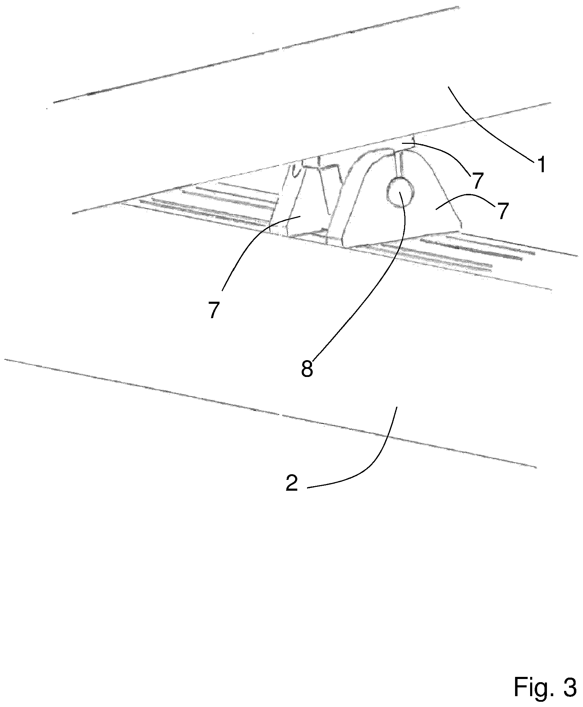

In Figur 3 ist eine dritte Ausführungsform gezeigt. Hier sind drei Lagereinheiten 7 zu erkennen, wovon zwei Lagereinheiten 7 auf dem Querbalken 2 montiert sind, während die dritte Lagereinheit 7 zwischen den beiden ersten Lagereinheiten 7 am Trägermodul 1 montiert ist. Jede Lagereinheit 7 weist eine Bohrung auf, wobei die Bohrungen miteinander fluchten, sodass eine gelenkbildende Achse 8 durch die drei Lagereinheiten 7 geführt werden kann, wodurch eine Veränderung des Neigungswinkels des Trägermoduls 1 möglich ist. Die Lagereinheiten 7 können Nutensteine (nicht gezeigt) aufweisen, welche in entsprechende hinterschnittene Nuten (nicht gezeigt) im Trägermodul 1 und im Querbalken 2 eingreifen, um die Lagereinheiten 7 am Trägermodul 1 und am Querbalken 2 zu befestigen.

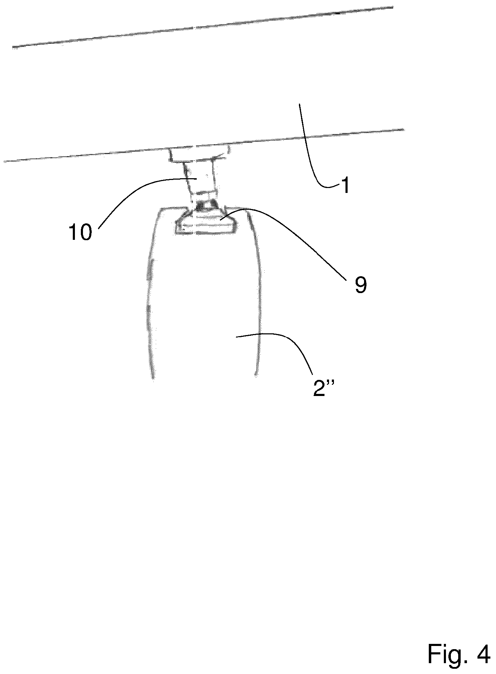

In Figur 4 ist eine andere Ausführungsform gezeigt. Hierbei weist der Querbalken 2" eine hinterschnittene Nut auf, in welcher der Fuß 9 eines handelsüblichen Gelenkfußes 9,10 eingreift, welcher am Trägermodul 1 befestigt ist. Der Gelenkfuß 9, 10 besteht aus einem Bein 10 sowie dem hierzu drehbeweglichen Fuß 9. Auch hier ist eine Drehbeweglichkeit gegeben.

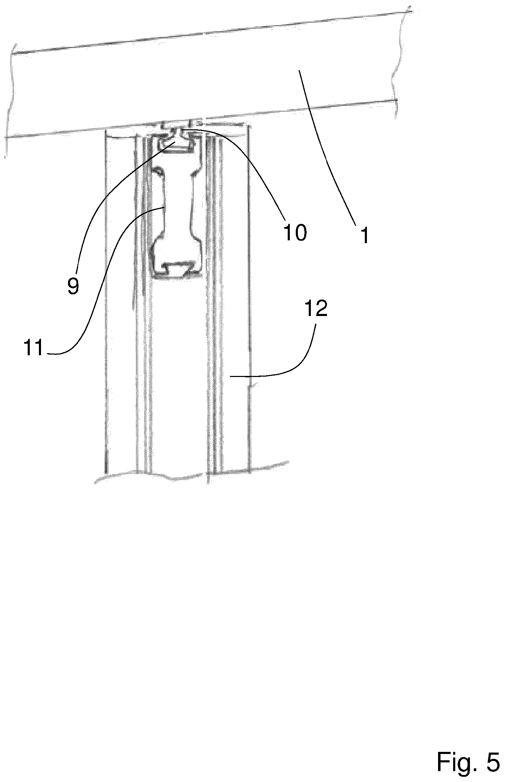

Weiterhin ist in den Figuren 5 bis 6 eine weitere Ausführungsform gezeigt. Auch hier ist ein Gelenkfuß 9,10 vorgesehen, der in eine hinterschnittene Nut des Querbalkens 11 eingreift. Der Querbalken 11 hat einen knochenförmigen Querschnitt mit einer hinterschnittenen Nut zur Aufnahme des Fuß 9. Der Querbalken 11 wird von einem oder mehreren Pfosten 12 gehalten, die an ihrem Ende einen Schlitz zur Aufnahme des Querbalkens 11 aufweist. Das Querbalkenprofil und Pfostenprofil sind hier identisch aufgebaut.

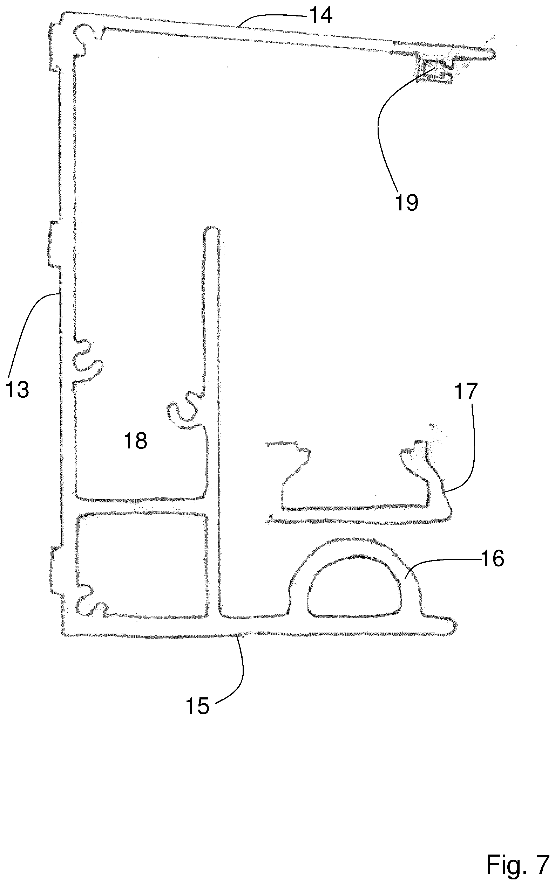

In Figur 7 ist eine Querschnittsansicht einer alternativen Ausführungsform eines Querbalkens dargestellt. Der Querbalken hat im Wesentlichen einen U förmigen Querschnitt mit einem U-Grund 13 und zwei U-Schenkeln 14,15. Der Querbalken ist dafür vorgesehen, mit seinem U-Grund 13 an einer Wand festgeschraubt zu werden. Die beiden U-Schenkel 14,15 bilden dann zusammen mit dem U-Grund 13 eine Nut zur Aufnahme von Trägermodulen. Der untere U-Schenkel 15 weist einen Wulst 16 auf. Das Trägermodul, welches in diesen Querbalken eingelegt werden soll, hat eine dem Wulst 16 entsprechende, korrespondierende Ausnehmung, sodass der Wulst 16 in der Ausnehmung des Trägermoduls zu liegen kommt und das Trägermodul relativ zu dem Querbalken um eine Schwenkachse, die senkrecht auf der Papierebene von Figur 7 steht, zumindest begrenzt verschränkt werden kann.

Anstelle des Wulst 16 könnte der U-Schenkel 15 auch eine hinterschnittene Nut 17 auf weisen, wie in der Figur 7 angedeutet. In diesem Fall müsste das Trägermodul ein entsprechendes Element aufweisen, welches in die hinterschnittene Nut eingreift, wie z.B. einen handelsüblichen Gelenksfuß.

Der obere U-Schenkel 14 weist eine Aufnahme 19 für eine Dichtung auf. Weiterhin ist eine Funktionskammer 18 vorgesehen, in welcher beispielsweise das Anschlusskabel der Photovoltaik-Module verlegt werden kann.

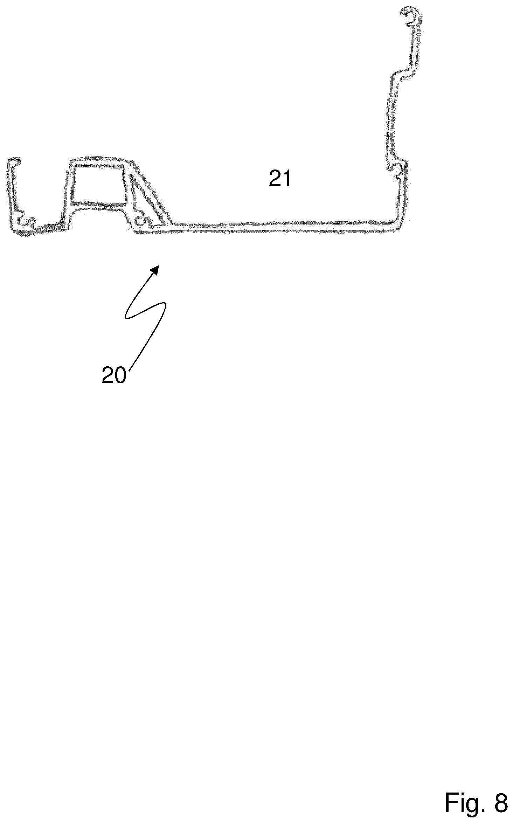

In Figur 8 ist eine Querschnittsansicht eines Regenrinnenelementes 20 dargestellt. Dieses Regenrinnenelement 20 ist ebenfalls als Hohlkammerprofil ausgebildet. Das Regenrinnenelement 20 kann an die Unterseite der Trägermodule geschraubt werden, sodass die nach oben offene Regenauffangkammer 21 unterhalb der geodätisch am tiefsten liegenden Kante der PV-Module liegt. Das Regenrinnenelement 20 stellt eine zusätzliche Stabilisierung des Überdachungssystems dar.

### Bezugszeichen

- 1: Trägermodul
- 2, 2',2": Querbalken
- 3: Flacheisen
- 4: Schwert
- 5: Rundstab
- 6, 6': Nut
- 7: Lagereinheit
- 8: Achse
- 9: Fuß
- 10: Bein
- 11: Querbalken
- 12: Pfosten
- 13: U-Grund
- 14,15: U-Schenkel
- 16: Wulst
- 17: Nut
- 18: Funktionskammer
- 19: Aufnahme für Dichtung

## Patentansprüche

1. Überdachungssystem für Terrassen, Balkone oder Parkplätze mit einem ersten Trägerelement (1) und einem zweiten Trägerelement (2, 2', 2"), die jeweils eine Länge, eine Breite und eine Dicke haben, wobei die Länge größer als die Breite und die Dicke ist, wobei erstes und zweites Trägerelement senkrecht zueinander ausgerichtet und mit Hilfe eines Befestigungselement lösbar miteinander befestigt sind, wobei das Befestigungselement derart ausgelegt ist, dass es eine Befestigung des ersten Trägerelement (1) am zweiten Trägerelement (2, 2', 2") in einer ersten und einer zweiten Position ermöglicht, wobei sich die zweite Position von der ersten Position dadurch unterscheidet, dass das erste Trägerelement (1) relativ zum zweiten Trägerelement (2, 2', 2") um eine Drehachse, die parallel zum zweiten Trägerelement (2, 2', 2") und senkrecht zum ersten Trägerelement (1) ausgerichtet ist, um einen Winkel α gedreht ist, wobei das Befestigungselement ein Kopfteil und ein Pfannenteil aufweist, wobei das Kopfteil einen Kopfgelenkabschnitt und das Pfannenteil einen Pfannengelenkabschnitt, welcher den Kopfgelenkabschnitt zumindest teilweise umschließt und an mindestens drei Punkten mit dem Kopfgelenkabschnitt in Kontakt tritt, aufweist, wobei erstes und/oder zweites Trägerelement als Hohlprofil ausgebildet ist, wobei das Hohlprofil eine hinterschnittene Nut aufweist und das Befestigungselement einen Nutenstein aufweist, welcher in die hinterschnittene Nut eingreift, **dadurch gekennzeichnet, dass** Kopfgelenkabschnitt und Pfannengelenkabschnitt kugelsegmentförmig ausgebildet sind.

2. Überdachungssystem nach Anspruch 1, **dadurch gekennzeichnet, dass** das Befestigungselement derart ausgelegt ist, dass es eine Befestigung in jeder Position zwischen der ersten und der zweiten Position erlaubt.

3. Überdachungssystem nach einem der Ansprüche 1 bis 2, **dadurch gekennzeichnet, dass** Kopfteil und/oder Pfannenteil einen Nutenstein aufweist, welcher in die hinterschnittene Nut eingreift.

4. Überdachungssystem nach einem der Ansprüche 1 bis 3, **dadurch gekennzeichnet, dass** das entweder i) das erste Trägerelement ein Sparrenelement und das zweite Trägerelement ein Querbalken (2, 2',2") zur Aufnahme eines Sparrenelementes ist oder ii) das erste Trägerelement ein Pfosten zum Tragen eines Querbalkens (2, 2',2") und das zweite Trägerelement ein Querbalken (2, 2',2") zur Aufnahme eines Sparrenelementes ist.

5. Überdachungssystem nach Anspruch 4, **dadurch gekennzeichnet, dass** ein Sparrenelement, ein Querbalken (2, 2',2") und ein Pfosten vorgesehen sind, wobei sowohl Querbalken (2, 2',2") als auch Pfosten als Hohlkammerprofil ausgebildet sind, wobei vorzugsweise der Querschnitt des Hohlkammerprofil des Pfosten mit dem Querschnitt des Hohlkammerprofils des Querbalken (2, 2',2") übereinstimmt.

## Claims

1. Roofing system for terraces, balconies or car parks with a first support element (1) and a second support element (2, 2', 2"), each of which has a length, a width and a thickness, wherein the length is greater than the width and the thickness, wherein the first and second support elements are aligned perpendicular to each other and are detachably fastened to each other by means of a fastening element, wherein the fastening element is designed in such a way that it enables the first support element (1) to be fastened to the second support element (2, 2', 2") in a first and a second position, the second position differing from the first position in that the first support element (1) is rotated relative to the second support element (2, 2', 2") about an axis of rotation which is parallel to the second support element (2, 2', 2") and perpendicular to the first support element (1), by an angle α, wherein the fastening element has a head part and a socket part, wherein the head part has a head joint section and the socket part has a socket joint section which at least partially encloses the head joint section and comes into contact with the head joint section at at least three points, wherein the first and/or second support elements are designed as hollow profiles, wherein the hollow profile has an undercut groove and the fastening element has a groove nut which engages in the undercut groove, **characterised in that** the head joint section and socket joint section are designed in the form of ball segments.

2. Roofing system according to claim 1, **characterised in that** the fastening element is designed in such a way that it allows fastening in any position between the first and second positions.

3. Roofing system according to one of claims 1 to 2, **characterised in that** the head part and/or socket part has a groove nut which engages in the undercut groove.

4. Roofing system according to one of claims 1 to 3, **characterised in that** either i) the first support element is a rafter element and the second support element is a crossbeam (2, 2', 2") for receiving a rafter element, or ii) the first support element is a post for supporting a crossbeam (2, 2', 2") and the second support element is a crossbeam (2, 2', 2") for receiving a rafter element.

5. Roofing system according to claim 4, **characterised in that** a rafter element, a crossbeam (2, 2', 2") and a post are provided, wherein both crossbeams (2, 2', 2") and posts are designed as hollow chamber profiles, wherein preferably the cross-section of the hollow chamber profile of the post corresponds to the cross-section of the hollow chamber profile of the crossbeam (2, 2', 2").

## Revendications

1. Système de toiture pour terrasses, balcons ou parkings comprenant un premier élément de support (1) et un deuxième élément porteur (2, 2', 2") qui ont chacun une longueur, une largeur et une épaisseur, la longueur étant supérieure à la largeur et à l'épaisseur, les premier et deuxième éléments porteurs étant orientés perpendiculairement l'un par rapport à l'autre et fixés l'un à l'autre de manière amovible à l'aide d'un élément de fixation, l'élément de fixation étant conçu de manière à permettre la fixation du premier élément porteur (1) sur le deuxième élément porteur (2, 2', 2") dans une première et une deuxième position, la deuxième position différant de la première position en ce que le premier élément de support (1) est pivoté par rapport au deuxième élément de support (2, 2', 2") autour d'un axe de rotation qui est parallèle au deuxième élément de support (2, 2', 2") et perpendiculaire au premier élément de support (1), l'élément de fixation comportant une section tête et une section cuvette, la section tête comportant une section d'articulation de tête et la section cuvette comportant une section d'articulation de cuvette qui entoure au moins partiellement la section d'articulation de tête et entre en contact avec la section d'articulation de tête en au moins trois points, le premier et/ou le deuxième élément de support étant réalisés sous forme de profilé creux, le profilé creux comportant une rainure en contre-dépouille et l'élément de fixation comportant un coulisseau qui s'engage dans la rainure en contre-dépouille, **caractérisé en ce que** la section d'articulation de tête et la section d'articulation de cuvette sont réalisées en forme de segment sphérique.

2. Système de toiture selon la revendication 1, **caractérisé en ce que** l'élément de fixation est conçu de manière à permettre une fixation dans n'importe quelle position entre la première et la deuxième position.

3. Système de toiture selon l'une des revendications 1 à 2, **caractérisé en ce que** la section tête et/ou la section cuvette comporte un coulisseau qui s'engage dans la rainure en contre-dépouille.

4. Système de toiture selon l'une des revendications 1 à 3, **caractérisé en ce que** soit i) le premier élément porteur est un élément de chevron et le deuxième élément porteur est une poutre transversale (2, 2', 2") destiné à recevoir un élément de chevron, ou ii) le premier élément porteur est un poteau destiné à supporter une traverse (2, 2', 2") et le deuxième élément porteur est une traverse (2, 2', 2") destinée à recevoir un élément de chevron.

5. Système de toiture selon la revendication 4, **caractérisé en ce qu'**un élément de chevron, une poutre transversale (2, 2', 2") et un poteau sont prévus, la poutre transversale (2, 2', 2") et le poteau étant tous deux réalisés sous forme de profilé creux, la section transversale du profilé creux du poteau correspondant de préférence à la section transversale du profilé alvéolaire de la poutre transversale (2, 2', 2").
